# EUROPEAN PATENT SPECIFICATION

(11) **EP 2 172 094 B1**
(45) Date of publication and mention of the grant of the patent: **18.01.2012**
(21) Application number: 09172207.4
(22) Date of filing: 05.10.2009
(51) Int. Cl.: A01D 34/76, A01D 34/66, A01D 34/82, A01D 43/063, A01D 69/03, A01D 75/18

(54) **Lawn mower**
Rasenmäher
Tondeuse à gazon

(30) Priority: 06.10.2008 JP 2008259774
(43) Date of publication of application: 07.04.2010
(73) Proprietor: ISEKI & CO., LTD., Ehime 799-2692 (JP)
(72) Inventor: Enomoto, Wakao, Iyo-gun, Ehime 791-2193 (JP); Goto, Renshi, Iyo-gun, Ehime 791-2193 (JP); Okamoto, Suguru, Iyo-gun, Ehime 791-2193 (JP); Honda, Haruyoshi, Iyo-gun, Ehime 791-2193 (JP); Toda, Hirotaka, Iyo-gun, Ehime 791-2193 (JP); Saiki, Hideaki, Iyo-gun, Ehime 791-2193 (JP)
(74) Representative: TBK

(56) References cited:
- JP-A- 2007 020 517
- JP-A- 2008 029 287
- US-A1- 2005 145 421
- US-A1- 2005 284 685
- US-A1- 2006 090 442

## Description

### [Technical Field]

The present invention relates to a riding lawn mower provided with a mower capable of moving up and down freely with respect to a vehicle body.

### [Background Art]

Conventionally, there has been disclosed a so-called mid-mower type riding lawn mower in which an engine is arranged at the front of a vehicle body to attach a mower between front wheels and rear wheels in Japanese Published Unexamined Patent Application No. 2007-20517 or others. This riding lawn mower is constituted in such a manner that a driving force of the engine is transmitted to the mower from the front side of the vehicle body via a drive shaft, thereby grass mowed by the mower is blown and transferred by using a blower into a collector bag at the back of the vehicle body via a chute arranged below the vehicle body, thereby collecting the grass.

[Patent Document 1] Japanese Published Unexamined Patent Application No. 2007-20517

### [Disclosure of the Invention]

### [Problems to be Solved by the Invention]

The riding lawn mower described in Patent Document 1 is constituted in such a manner that the mower is arranged between the front wheels and the rear wheels to receive power for the mower from the engine arranged at the front of the vehicle body. Thus, there is a possibility that a distance between the axle shaft of the front wheels and the mower is too close and they come in contact with each other due to vibration of the vehicle body during operation. On the other hand, where an attempt is made to increase a distance between the axle shaft of the front wheels and the mower, the only alternative is to install a joint in the transmission system between the axle shaft of the front wheels and the mower which is kept greatly inclined with respect to a virtual straight line in the front-back direction of the vehicle body, thus making it difficult to transmit power and also raising the height of the vehicle body, which are problems.

Further, since an input unit is arranged at the center from the right to left, power is transmitted by a belt to one of gear cases for one of two adjacent blades to result in a complicated constitution. US 2005/0145421 A1 shows a different drive train arrangement for a riding lawn mower.

Therefore, an object of the present invention is to provide a mid-mower type riding lawn mower in which a mower is arranged between front wheels and rear wheels and also power is easily transmitted to the mower from an engine at the front of a vehicle body, with the height of the vehicle body also kept low.

### [Means for Solving the Problems]

The above object of the present invention is attained by the following solution.

The present invention as set forth in claim 1 is a lawn mower which is provides with an engine (27) arranged at the front of a vehicle body (1); a pair of front wheels (23) and a pair of rear wheels (26) supported at the front and rear of the vehicle body (1); a steering wheel (34) supported on the vehicle body (1) for steering operation of the vehicle body; a mower deck (13) arranged between the pair of front wheels (23) and the pair of rear wheels (26) to have internally a pair of right and left blades (54) for mowing grass; a duct (22) as each channel of transferring rearward the grass mowed by the blades (54) arranged between the pair of rear wheels (26); and a collector (16) for accommodating the grass transferred from the duct (22) attached backward the vehicle body (1);the lawn mower characterized by comprising: an engine output shaft (3) arranged on the vehicle body (1) rearward the engine (27) along the center line L in the front-back direction of the central part across the vehicle body (1); a first drive shaft (6a) arranged diagonally rearward, when viewed from above, so as to pass through the side of a steering wheel (34) toward the back of the vehicle body from the engine output shaft (3); a second drive shaft (6b) for transmitting power to the rear wheels (26), arranged along the side of the duct (22) via a first joint member (71) connected to the rear end of the first drive shaft (6a);
a third drive shaft (11a) arranged at a position parallel to the second drive shaft (6b); transmitting means (52, 53; 12) installed at the front end of the second drive shaft (6b) for transmitting power of the second drive shaft (6b) to the third drive shaft (11a); a fourth drive shaft (11b) for transmitting power to a input shaft (15) of the blades (54) via a second joint member (72) connected to the front end of the third drive shaft (11a); wherein the input shaft (15) and fourth drive shaft (11b) are connected via a third joint member (73), the first drive shaft (6a)is arranged diagonally rearward on the left from the center line L, when viewed from above, the second drive shaft (6b) and the third drive shaft (11a) are laterally on the left of the center line L and the first drive shaft (6a) and the fourth drive shaft (11b) are arranged, with the rear side of the quadrilateral, formed by the joining the four ends of the first and the fourth drive shafts (6a and 11b), is narrower than the front side, viewed from the above.

The lawn mower of second aspect of the invention according to claim 1, characterized in that a pair of right and left gear shafts (14, 14) are set rotationally at the mower deck (13), a pair of gears (54, 54) are provided at the lower end portion of each of the gear shafts (14, 14), a first and a second gear cases (59, 60) are installed above each of the gear shafts (14, 14) respectively on the mower deck (13), the input shaft (15) is supported rotationally on the first gear case (59), and interlinked with the gear shaft (14) located directly below via meshed bevel gears (14') provided at the end of the gear shaft (14) and bevel gear (15') provided at the end of the gear shaft (15), and a blade drive shaft (62) is provided for transmitting power from the input shaft (15) from the first gear case (59) to the second gear case (60).

### [Effect of the Invention]

According to the present invention described in claim 1, there is provided a mid-mower type riding lawn mower in which power is easily transmitted to a mower from an engine at the front of a vehicle body, with the height of the vehicle body also kept low.

According to the invention described in claim 2, the input shaft (15) can be connected to one of the pair of right and left gear shafts (14, 14) set rotationally so as to come closer unevenly to the right and left with respect to a center line L.

### [Brief Description of the Drawings]

Fig. 1 is a side view of a riding lawn mower of one embodiment in the present invention.
Fig. 2 is a plan view of Fig. 1.
Fig. 3 is an enlarged side view mainly showing a power transmission system given in Fig. 1.
Fig. 4 is a plan view of Fig. 3.
Fig. 5 is a schematic view of a mower deck of the riding lawn mower in Fig. 1 which moves up and down.
Fig. 6 shows coupling relationship between an HST pedal and the HST of the riding lawn mower given in Fig. 1.
Fig. 7 shows coupling relationship between an HST pedal and the HST of the riding lawn mower given in Fig. 1.

### [Best Mode for Carrying Out the Invention]

Hereinafter, a description will be given for an embodiment of the present invention with reference to the drawings.

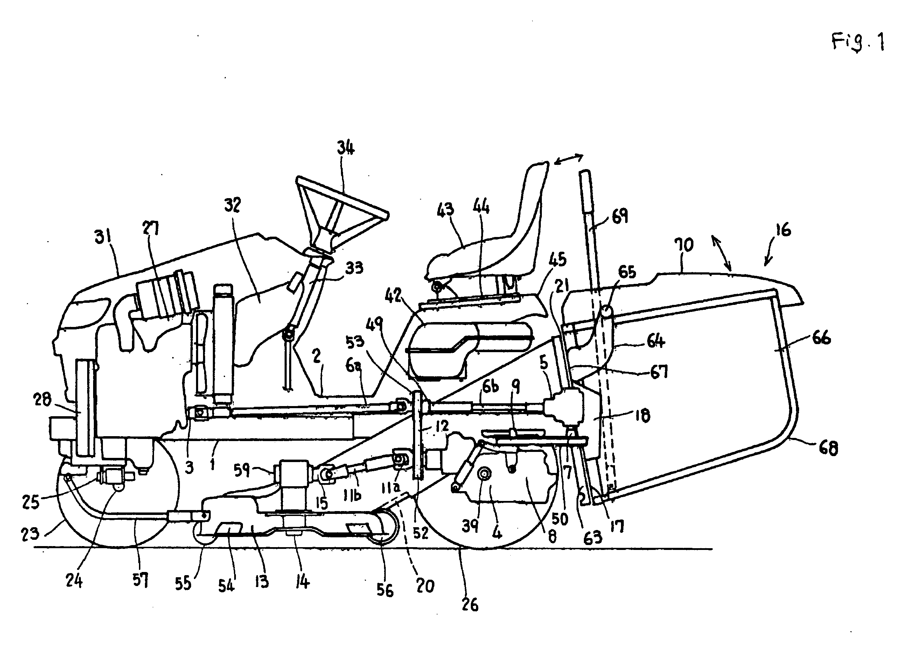

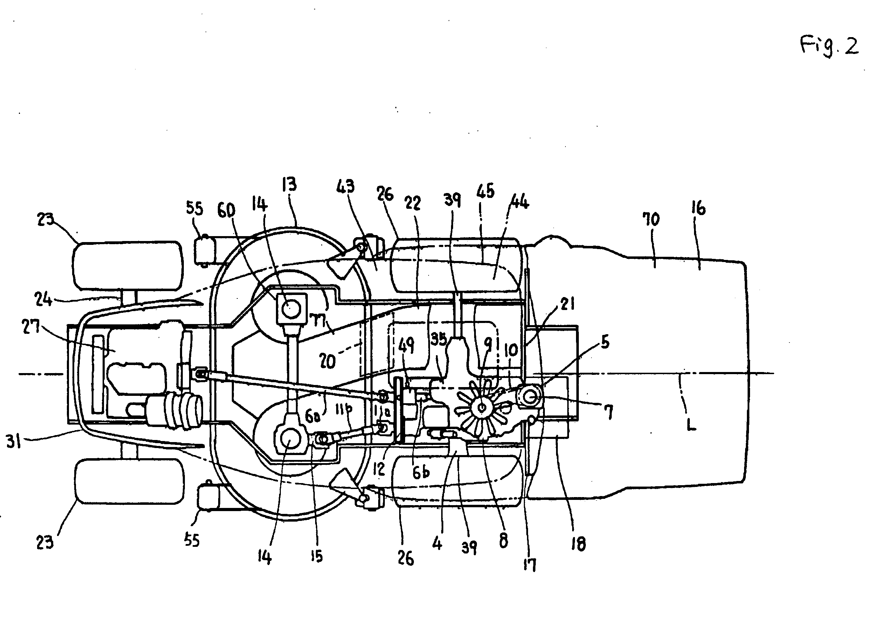

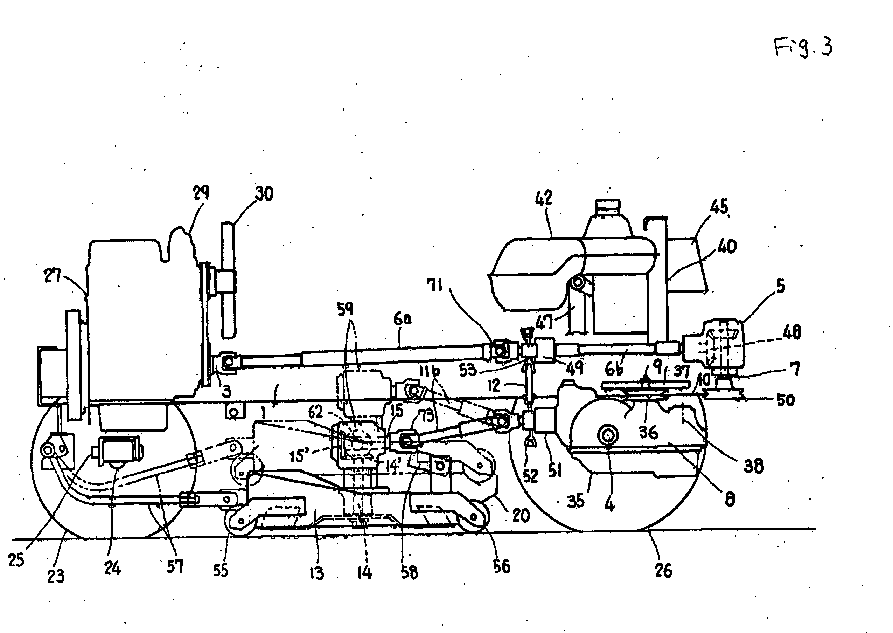

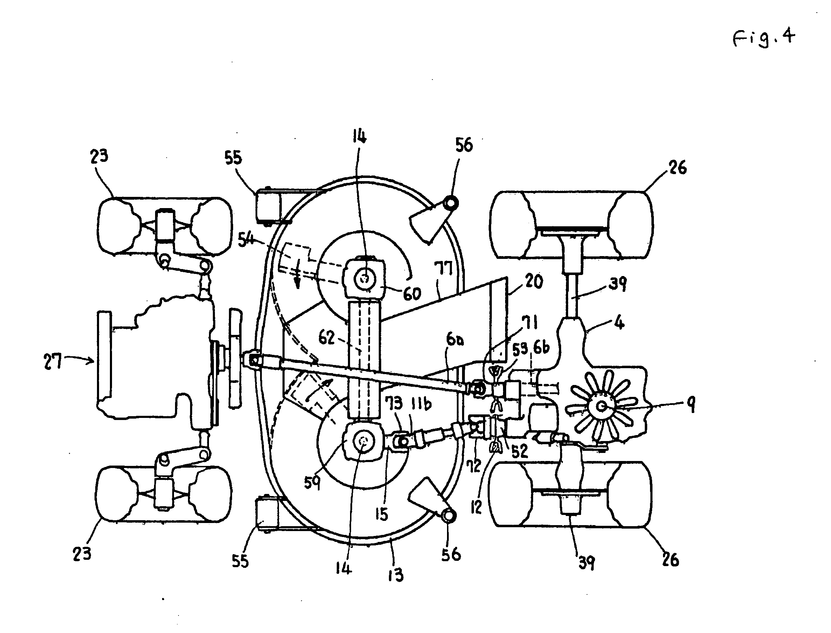

Fig. 1 shows a side view of a riding lawn mower of the present embodiment. Fig. 2 shows a plan view of a power transmission configuration of the riding lawn mower. Fig. 3 shows a side view showing a mower part and a power transmission configuration to wheels. Fig. 4 is a plan view showing the mower part and the power transmission configuration to wheels.

It is noted that in the present specification, a right and left direction with respect to a direction in which a riding lawn mower moves forward is referred to as right or left, a direction in which it moves forward is referred to as front, and a direction in which it moves backward is referred to as back.

A front axle 24 having a pair of right and left front wheels 23 below the front side of a vehicle body 1 is supported in a hanging manner so as to sway freely around a center pivot 25, and a rear axle housing 4 having a pair of right and left rear wheels 26 below the rear side thereof is supported in a hanging manner. An engine output shaft 3 of an engine 27 mounted at the front end of the vehicle body 1 is driven and rotated to transmit power via a main drive shaft 6 coupled with the rear side of the engine output shaft 3, by which the rear wheels 26 can be driven and interlocked for running. The engine output shaft 3 is arranged along an upper part of the center line L (Fig. 2) in the front-back direction of the central part across the vehicle body 1, which is at the lower part of an engine body and at the central part in the width direction from right to left. Such a constitution is provided that a fly wheel 28 is attached at the front end part of the engine output shaft 3, a radiator 29, a radiator fan 30 and others are arranged at the back of the engine 27, the upper part of which is covered with a hood 31, an oil tank 32 is installed at the back thereof, and a steering wheel 34 is supported on a steering post 33 to steer the front wheels 23 in an interlocking manner.

A mower deck 13 which has internally a pair of right and left blades 54 for mowing grass is arranged between the front wheels 23 and the rear wheels 26.

The rear axle housing 4 forms a differential gear case 35 which has internally a rear-wheel differential gear mechanism at a position closer to one side of a tread (on the left side in the present embodiment, and the same will apply hereinafter) with respect to the center line L. There is provided such a constitution that a hydraulic static transmission (HST) case 8 is constituted integrally on the side of the differential gear case 35, an HST input shaft 9 is projected immediately upward from the case 8, thereby a pulley 36, a cooling fan 37 and others are rotated integrally. A trunnion shaft mechanism 38 for controlling the HST is arranged at the back of the HST input shaft 9.

The rear wheels 26 are set pivotally at both ends of a rear axle shaft 39 inside the rear axle housing 4. The upper end portions of rear brackets 40 installed upright from both the right and left sides on the rear axle housing 4 are coupled by a coupling frame (not shown), and a fuel tank 42 for the engine 27 is mounted on the coupling frame (not shown), and a seat 43 is also installed above the fuel tank 42.

A step floor 2 is constructed above the vehicle body 1 and the main drive shaft 6, a seat floor 44 bent upward is installed consecutively at the back of the step floor 2, and the rear end portion thereof is fixed on the coupling frame 41, thereby forming a fender 45 on both the right and left sides.

It is noted that the main drive shaft 6 is constituted with a first drive shaft 6a having a front end coupled with the engine output shaft 3 and a second drive shaft 6b having a start end portion coupled with the rear end of the first drive shaft 6a via a first joint member 71 (Fig. 3, Fig. 4) and having a rear end coupled with a transmission system inside the rear case 5.

Further, the main drive shaft 6 is constituted in such a manner that a pulley 53 to be described later is fixed and installed in front of the second drive shaft 6b and the rear end is extended into the rear case 5 to attach a bevel gear 48.

A PTO shaft 11 for transmitting power of the main drive shaft 6 to blades 54 inside the mower deck 13 is arranged diagonally below the main drive shaft 6. The PTO shaft 11 is constituted with a third drive shaft 11a in which a pulley 52 is fixed and installed and a belt 12 is used to wind around the pulley 52 and a pulley 53 of the second drive shaft 6b, thereby receiving power of the second drive shaft 6b, and a fourth drive shaft 11b which is coupled with the third drive shaft 11a via a second joint member 72 (Fig. 3, Fig. 4). This is a constitution in which a transmission terminal portion of the fourth drive shaft 11b is coupled with an input shaft 15 of the mower deck 13 via a third joint member 73 (Fig. 3, Fig. 4).

As shown in Fig. 4, the first drive shaft 6a is arranged diagonally rearward on the left from the center line L, when viewed from above, the second drive shaft 6b is laterally on the left of the center line L and installed substantially parallel with the center line L. The third drive shaft 11a is arranged substantially parallel with the second drive shaft 6b, and the fourth drive shaft 6b is arranged so as to face diagonally forward on the left toward the front of a vehicle body. Then, the first drive shaft 6a and the fourth drive shaft 11b are arranged so as to be wider on the vehicle body front side, that is, substantially parallel, with the rear end being narrower than the front end, when viewed from above.

Power is transmitted to the blades 54 inside the mower deck 13 in the order of the first drive shaft 6a, the second drive shaft 6b, the belt 12, the third drive shaft 11a, the fourth drive shaft 11b, and the input shaft 15.

A transmission configuration for transmitting power to the rear wheels 26 is constituted in such a manner that the main drive shaft 6 extending from the engine output shaft 3 mounted at the front of the vehicle body to the rear case 5 on one side at the back thereof over the rear axle housing 4 is installed along the lower part of the step floor 2 of the vehicle body 1 in the front-back direction, and a belt 10 is hung between the rear output shaft 7 drooped from the rear case 5 and the HST input shaft 9 on the HST case 8 arranged on one side (on the left side in this embodiment) at the back of the rear axle housing 14, thereby allowing the rear output shaft 7 and the HST input shaft 9 to interlock.

Further, a front plate 17 which is attached at the rear end portion of the vehicle body 1 to form a front wall of the collector 16 for accommodating grass transferred and carried by rotational actions of the blades 54 from the mower deck 13 is fitted to a periphery of the rear case 5. More specifically, not shown in figures, the rear end of a duct 22 is fitted to one side (on the right side in the present embodiment, and the same will apply hereinafter) of an L-shaped opening formed on the front plate 17 to form a supply port 21, a lid body, which is protrudingly formed, is attached to the left side of the L-shaped opening so as to be attached removably with bolts, and attachment of the lid body forms a recess 18 in a space at the back of the L-shaped opening. Where the collector 16 is attached at the rear end portion of the vehicle body 1, the recess 18 formed on the front plate 17 at the front wall portion of the collector 16 is fitted to a periphery of the rear case 5 arranged at the back of the vehicle body 1.

As shown in Fig. 3, power of the input shaft 9 in the HST case 8 arranged at the back of the rear axle housing 4 is transmitted from the rear output shaft 7 in the rear case 5 to the belt 10 (Fig. 2, Fig. 3). Further, grass carried from the mower deck 13 into the collector 16 is supplied from a supply port (a right half of the L-shaped opening) formed at the side of the recess 18 on the front plate 17.

Further, a duct 22 passing between the discharge port 20 on the mower deck 13 and the supply port 21 on the collector 16 located rearward is installed so as to come closer unevenly to the right side with respect to the center line L of the vehicle body 1, and the main drive shaft 6 and the PTO shaft 11 which interlock from the engine output shaft 3 to the rear case 5 are arranged at a position closer to a side opposite to the duct 22. Driving and rotation of the engine output shaft 3 located forward are transmitted through the rear output shaft 7 at the rear end portion, the belt 10 and others via the main drive shaft 6 coming closer unevenly to one side of the center line L of the vehicle body 1, also transmitted via the HST input shaft 9, and further transmitted through the PTO shaft 11 via the belt 12 midway at the main drive shaft 6. More specifically, a PTO clutch is constituted via the belt 12 from a pulley 53 installed at the front end portion of the second drive shaft 6b, with a tension clutch pulley arranged at the belt 12.

Grass mowed by the mower deck 13 is carried and accommodated into the collector 16 from the discharge port 20 via the duct 22 arranged on a side opposite to the main drive shaft 6, the PTO shaft 11 (the fourth drive shaft 11b) coupled with the front of the PTO shaft 11 (the third drive shaft 11a), a drive shaft 19 and others.

The rear case 5 of an input shaft (bevel gear) 48 (Fig. 3) for coupling the rear end of the second drive shaft 6b is attached and supported to a coupling bracket 47 coupled with the rear bracket 40. A metal 49 (Fig. 1, Fig. 3) which acts as a bearing of the second drive shaft 6b is also attached and supported thereto.

The rear output shaft 7 in the vertical direction which is interlocked via a bevel gear 48 is set pivotally and projected downward, thereby a pulley 50 is fixed on the rear case 5. The pulley 50 is arranged at a position equal in height to the back side of a pulley 36 of the input shaft 9 of the HST, thus transmitting power by the belt 10 hung around. Further, in the PTO shaft 11 (11a, 11b), the rear end portion thereof is attached to a metal 51 as a bearing projected to a front portion at the left end of the rear axle housing 4. The belt 12 is hung between a pulley 52 fixed to the lower PTO shaft 11 and a pulley 53 fixed to the upper main drive shaft 6, thereby transmitting power to rotate the PTO shaft 11. The PTO shaft 11 is arranged so as to be installed at the lower left outer side of the upper main drive shaft 6 and opposed to a part substantially directly at the back of the input shaft 15 on the mower deck 13 located forward.

The mower deck 13 is a mid-mount type attached to an underpart of the vehicle body 1 in which a pair of right and left gear shafts 14 are set pivotally so as to come closer unevenly to both right and left side parts with respect to the center line L, having blades 54 for mowing grass at the lower end portion of each gear shaft 14. The mower deck 13 has gauge wheels 55, 56 arranged at front and rear lower end portions, at the central upper part of the mower deck 13, a discharge tube 77 is formed for guiding the mowed grass to the discharge port 20 rearward at the center. The mower deck 13 is constituted in such a manner as to hoist the vehicle body 1 with a pair of right and left parallel front links 57 and a pair of right and left parallel rear links 58 arranged thereabove and to move up and down, while being kept horizontal by a lift mechanism. Further, gear cases 59, 60 are installed above the right and left gear shafts 14 on the mower deck 13, the input shaft 15 is supported pivotally at the gear case 59 on the left side, and the gear shaft 14 directly below is interlocked and meshed via bevel gears 14', 15' (Fig. 3). It is noted that power is transmitted from the gear case 59 to the gear case 60 by way of a blade drive shaft 62.

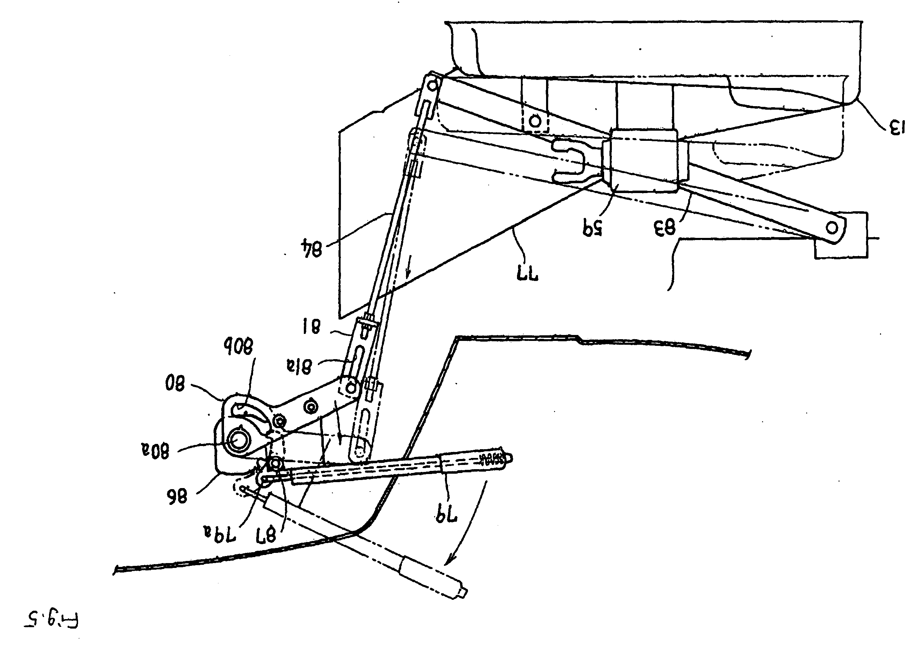

As shown in Fig. 5, lift lever 79 for moving the mower deck 13 up and down is installed on the seat floor 44, an arm 80 having a circular long hole 80b integral with the lift lever 79 is installed at an operating central axis part 79a of the lift lever 79, a coupling member 81 having a long hole 81a is attached at the leading end of the arm 80, and the coupling member 81 is attached at a rod 84 coupled with the leading end of a supporting arm 83 supported on the vehicle body 1 so as to move rotationally freely. It is noted that the gear cases 59, 60 of the mower deck 13 are supported at the center of the supporting arm 83 so as to move rotationally freely.

Further, a cam 86 having a plurality of grooves formed on its outer peripheral side at predetermined intervals is installed by being fixed to a rotational movement axis 80a of the arm 80 having a circular long hole 80b. When the leading end of the lock member 87 is fitted into a groove of the cam 86, the mower deck 13 can also be elevated when the lift lever 79 is allowed to move rotationally upward around the operating central axis part 79a.

Further, since the coupling member 81 is coupled, the coupling member 81 having a long hole 81a at which the leading end of the arm 80 having the circular long hole 80b and the leading end of the rod 84 on the vehicle body side are allowed to move up and down, if the leading end of the lock member 87 fitted into a groove of the cam 86 is kept released during work of mowing grass by using a mower, even when an upward shock is given from the ground under the mower, an upward movement amount of the rod 84 and the coupling member 81 (sliding amount inside the long hole 81a of the coupling member 81) is absorbed by a rotational movement amount around the operating central axis of the arm 80 (sliding amount inside the circular long hole 80b) upon upward movement of the rod 84 and the coupling member 81 having the long hole 81a. Thereby, the lift lever 79 will not move up and down even when the mower is shocked upward by the rod 84.

The input shaft 15 is coupled with the PTO shaft 11 (the third drive shaft 11a) located rearward via the PTO shaft 11 (the fourth drive shaft 11b), a universal joint, an expansion shaft coupling and the like and can thereby transmit power. A gear drive shaft 62 extending between the gear cases 59, 60 is arranged to interlock and mesh with the bevel gear 15, and the right and left gear shafts 14 are constituted in an interlocking manner so as to rotate from the front side toward the inner rear side.

The collector 16 is attached to the rear end of the vehicle body 1. An attachment frame 63 attached removably at the rear end portion of the vehicle body 1 (Fig. 1) is formed in such a configuration that encloses the supply port 21 at the rear end of the duct 22 and outer peripheral parts of the rear case 5 and others, thereby a front plate 17 is attached along the attachment frame 63. Then, the supply port 21, the recess 18 and others are formed on the front plate 17. Further, the supporting arm 64 is projected rearward above the attachment frame 63, thereby attaching the collector bag 66 or a collector case (not illustrated) supported so as to open and close and move rotationally backward above around the supporting shaft 65.

The collector bag 66 is that in which a bag opening 67 is formed on the front face and can be closed by being brought into contact with the rear face of the front plate 17 under pressure. The discharge port 20 of the mower deck 13 and the supply port 21 formed in the right portion of the front plate 17 is coupled by the duct 22 passing above the right side of the rear axle housing 4, thereby grass ejected from the discharge port 20 is transferred and guided, then accommodated into the collector bag 66 from the supply port 21. In the collector bag 66, a bag frame 68 is formed along an outer peripheral corner, the outer periphery of the bag frame 68 is covered with a ventilating net cloth, and grass can be carried and accommodated with the transfer air discharged from meshed parts of the net cloth in a state where the bag opening 67 is closed by being kept in contact with the front plate 17. Further, the handle 69 projected above the collector bag 66 is operated so as to move rotationally backward above around the supporting shaft 65, by which the bag opening 67 is opened downward, and the accommodated grass can be dropped and discharged. The upper part of the collector bag 66 is covered with a cover 70.

Grass is carried into the collector bag 66 from the supply port 21, with the collector bag 66 kept at a grass-accommodating posture. In this instance, since the grass is separated by the face of the recess 18 on the front plate 17, no grass is brought out or in contact with the rear case 5 or others in front of the recess 18, thus making it possible to prevent direct scattering of dust. The recess 18 on the front plate 17 is formed so as to cover a wider area by being fitted to the rear case 5 and also a pulley 50 thereunder. Then, the recess is fitted as deeply as possible, by which the collector 16 is allowed to come closer to the vehicle body 1, thus making it possible to decrease a rearward projection of the collector 16. Further, the upper side face (not illustrated) of the recess 18 inside the collector bag 66 can be formed so as to give a downward inclined face so that no grass remains on discharge.

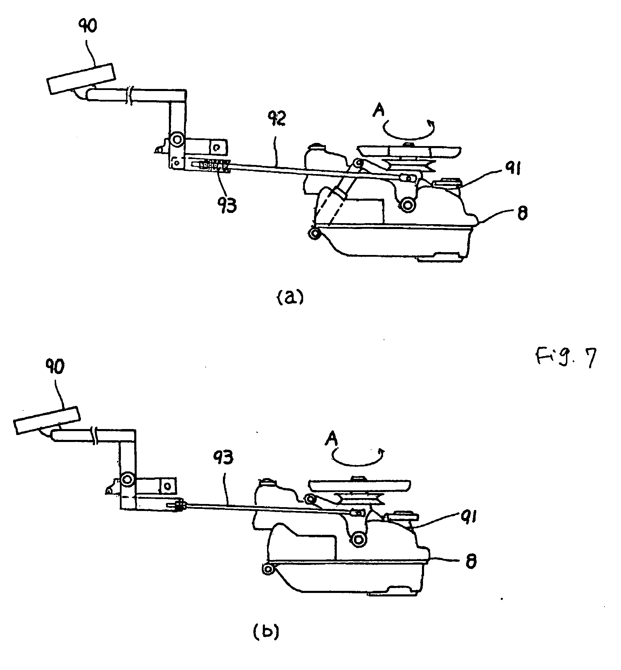

As shown in Fig. 7, an HST pedal 90 for rotating a trunnion shaft (not illustrated) of the HST case 8 is arranged on the step floor 2. The HST pedal 90 is pressed down, by which a rod 92 is actuated to draw a trunnion arm 91 coupled with the trunnion shaft, thereby rotating the trunnion shaft. At this time, the HST pedal 90 is pressed down, thereby where a vehicle is allowed to move forward, the trunnion shaft is rotated in a direction indicated by the arrow A. Further, where the vehicle is allowed to move backward, the trunnion shaft is rotated in a direction opposite to that indicated by the arrow A.

At this time, a speed at which the HST pedal 90 is pressed down is directly transmitted to the rod 92 to determine a rotating speed of the trunnion shaft. Thus, where the HST pedal 90 is pressed down at a higher speed, the trunnion shaft is rotated faster. In this instance, an operational pressure of the HST is fastest when a vehicle is accelerated suddenly. Where the HST pedal 90 is pressed down at a higher speed, rotating members and rotationally moving members of the HST are worn away more greatly and this operation is repeated many times to affect the operating life of the HST.

Therefore, as shown in Fig. 6, a spring 93 is inserted between the rod 92 and an interlocking member of the HST pedal 90. Thereby, when the HST pedal 90 is pressed down all at once, the spring 93 allows the HST trunnion shaft to move rotationally in a delayed manner, thus making it possible to extend the operating life of the HST. Further, even when a vehicle is subjected to vibration, the sway of the HST pedal 90 is absorbed by a spring attachment part, thereby eliminating any possible erroneous operation of the vehicle.

### [Industrial Applicability]

The mid-mower type riding lawn mower of the present invention is highly industrially applicable as a compact lawn mower.

### [Description of Symbols]

1: Vehicle body
3: Engine output shaft
4: Rear axle housing
5: Rear case
6: Main drive shaft (first drive shaft 6a, second drive shaft 6b)
7: Rear output shaft
8: HST case
9: HST input shaft
10: Belt
11: PTO shaft (third drive shaft 11a, fourth drive shaft 11b)
13: Mower deck
14: Gear shaft
15: Mower input shaft
16: Collector
22: Duct
27: Engine
42: Fuel tank
66: Collector bag

## Claims

1. A lawn mower comprising:
an engine (27) arranged at the front of a vehicle body (1); a pair of front wheels (23) and a pair of rear wheels (26) supported at the front and rear of the vehicle body (1); a steering wheel (34) supported on the vehicle body (1) for steering operation of the vehicle body; a mower deck (13) arranged between the pair of front wheels (23) and the pair of rear wheels (26) to have internally a pair of right and left blades (54) for mowing grass; a duct (22) as each channel of transferring rearward the grass mowed by the blades (54) arranged between the pair of rear wheels (26); and a collector (16) for accommodating the grass transferred from the duct (22) attached backward the vehicle body (1);
the lawn mower **characterized by** comprising:
an engine output shaft (3) arranged on the vehicle body (1) rearward the engine (27) along the center line L in the front-back direction of the central part across the vehicle body (1);
a first drive shaft (6a) arranged diagonally rearward, when viewed from above, so as to pass through the side of a steering wheel (34) toward the back of the vehicle body from the engine output shaft (3);
a second drive shaft (6b) for transmitting power to the rear wheels (26), arranged along the side of the duct (22) via a first joint member (71) connected to the rear end of the first drive shaft (6a);
a third drive shaft (11a) arranged at a position parallel to the second drive shaft (6b);
transmitting means (52, 53; 12) installed at the front end of the second drive shaft (6b) for transmitting power of the second drive shaft (6b) to the third drive shaft (11a);
a fourth drive shaft (11b) for transmitting power to an input shaft (15) of the blades (54) via a second joint member (72) connected to the front end of the third drive shaft (11a);
wherein the input shaft (15) and fourth drive shaft (11b) are connected via a third joint member (73), the first drive shaft (6a) is arranged diagonally rearward on the left from the center line L, when viewed from above, the second drive shaft (6b) and the third drive shaft (11a) are laterally on the left of the center line L and the first drive shaft (6a) and the fourth drive shaft (11b) are arranged, with the rear side of the quadrilateral, formed by the joining the four ends of the first and the fourth drive shafts (6a and 11b), is narrower than the front side, viewed from the above.

2. The lawn mower according to claim 1, **characterized in that** a pair of right and left gear shafts (14, 14) are set rotationally at the mower deck (13), a pair of gears (54, 54) are provided at the lower end portion of each of the gear shafts (14, 14), a first and a second gear cases (59, 60) are installed above each of the gear shafts (14, 14) respectively on the mower deck (13),
the input shaft (15) is supported rotationally on the first gear case (59), and interlinked with the gear shaft (14) located directly below via meshed bevel gears (14') provided at the end of the gear shaft (14) and bevel gear (15') provided at the end of the gear of the gear shaft (15), and a blade drive shaft (62) is provided for transmitting power from the input shaft (15) from the first gear case (59) to the second gear case (60).

## Patentansprüche

1. Rasenmäher, mit:
einem Verbrennungsmotor (27), der an der Front eines Fahrzeugkörpers (1) angeordnet ist; einem Vorderradpaar (23) und einem Hinterradpaar (26), die an der Front und an dem Heck des Fahrzeugkörpers (1) gehalten sind; einem Lenkrad (34), das an dem Fahrzeugkörper (1) zum Lenkbetrieb des Fahrzeugkörpers gehalten ist; einem Mähwerk (13), das zwischen dem Vorderradpaar (23) und dem Hinterradpaar (26) angeordnet ist und im Inneren links und rechts ein Klingenpaar (54) zum Mähen von Gras hat; einer Leitung (22) als jeweiligen Kanal zum heckwärtigen Überführen des Grases, das von den Klingen (54) gemäht wurde, die zwischen dem Hinterradpaar (26) angeordnet ist; und einem Sammler (16) zum Unterbringen des Grases, das von der Leitung (22) überführt worden ist, der heckseitig am Fahrzeugkörper (1) angebracht ist;
wobei der Rasenmäher **dadurch gekennzeichnet ist, dass** er Folgendes aufweist:
eine Motorausgangswelle (3), die an dem Fahrzeugkörper (1) hinter dem Verbrennungsmotor (27) entlang der Mittellinie L angeordnet ist, die sich in der Front-Heck-Richtung des mittleren Teils über den Fahrzeugkörper (1) erstreckt;
eine erste Antriebswelle (6a), die von oben betrachtet diagonal heckwärts angeordnet ist, um seitlich eines Lenkrads (34) von der Motorausgangswelle (3) in Richtung des Hecks des Fahrzeugkörpers zu verlaufen;
eine zweite Antriebswelle (6b) zum Übertragen von Leistung auf die Hinterräder (26), die entlang der Seite der Leitung (22) mittels eines ersten Anschlusselements (71) angebracht ist, das mit dem hinteren Ende der ersten Antriebswelle (6a) verbunden ist;
eine dritte Antriebswelle (11a), die in einer zu der zweiten Antriebswelle (6b) parallelen Stellung angeordnet ist;
Übertragungsmittel (52, 53; 12), die an dem vorderen Ende der zweiten Antriebswelle (6b) zum Übertragen von Leistung der zweiten Antriebswelle (6b) auf die dritte Antriebswelle (11a) eingebaut ist;
eine vierte Antriebswelle (11b) zum Übertragen von Leistung auf eine Eingangswelle (15) der Klingen (54) über ein zweites Anschlusselement (72), das mit dem vorderen Ende der dritten Antriebswelle (11a) verbunden ist;
wobei die Eingangswelle (15) und die vierte Antriebswelle (11b) über ein drittes Anschlusselement (73) verbunden sind, die erste Antriebswelle (6a) von oben betrachtet diagonal heckwärtig links von der Mittellinie L angeordnet ist, die zweite Antriebswelle (6b) und die dritte Antriebswelle (11a) seitlich links von der Mittellinie L sind und die erste Antriebswelle (6a) und die vierte Antriebswelle (11b) so angeordnet sind, dass die hintere Seite des Vierecks, das durch Verbinden der vier Enden der ersten Antriebswelle und der vierten Antriebswelle (6a und 11b) gebildet wird, von oben betrachtet schmaler als die vordere Seite ist.

2. Rasenmäher nach Anspruch 1, **dadurch gekennzeichnet, dass** ein Paar aus rechter und linker Zahnradwelle (14, 14) drehbar an dem Mähwerk (13) vorgesehen ist, ein Zahnradpaar (54, 54) an dem unteren Endabschnitt von jeder der Zahnradwelle (14, 14) vorgesehen ist, ein erstes Zahnradgehäuse beziehungsweise ein zweites Zahnradgehäuse (59, 60) über der jeweiligen Zahnradwelle (14, 14) an dem Mähwerk (13) eingebaut ist,
wobei die Eingangswelle (15) an dem ersten Zahnradgehäuse (59) drehend gelagert und mit der Zahnradwelle (14), die direkt darunter liegt, über kämmende Kegelzahnräder (14'), die an dem Ende der Zahnradwelle (14) vorgesehen sind, und ein Kegelzahnrad (15'), das an dem zahnradseitgen Ende der Zahnradwelle (15) angeordnet ist, gekoppelt ist, und wobei eine Klingenantriebswelle (62) zum Übertragen von Leistung von der Eingangswelle (15) von dem ersten Zahnradgehäuse (59) zu dem zweiten Zahnradgehäuse (60) vorgesehen ist.

## Revendications

1. Tondeuse à gazon comprenant :
un moteur (27) disposé à l'avant du corps (1) du véhicule ; une paire de roues avant (23) et une paire de roues arrières (26) supportées à l'avant et à l'arrière du corps (1) du véhicule ; un volant (34) supporté sur le corps (1) du véhicule pour orienter les opérations du corps (1) du véhicule ; un châssis (13) de tondeuse disposé entre la paire de roues avant (23) et la paire de roues arrières (26) afin d'avoir à l'intérieur une paire de lames (54) droite et gauche pour tondre l'herbe ; un conduit (22) faisant office de chacun de canaux pour transférer vers l'arrière de l'herbe tondue par les lames (54) disposées entre la paire de roues arrières (26) ; et un collecteur (16) pour recevoir l'herbe transférée du conduit (22) fixé à l'arrière du corps (1) du véhicule ;
la tondeuse à gazon **caractérisée par** le fait de comprendre :
un arbre de sortie (3) du moteur disposé sur le corps (1) du véhicule vers l'arrière du moteur (27) le long de la ligne centrale L dans la direction avant-arrière de la partie centrale à travers le corps (1) du véhicule ;
un premier arbre de commande (6a) disposé en diagonale vers l'arrière, lorsqu'on regarde d'en-haut, de façon à passer à travers le côté d'un volant (34) vers l'arrière du corps du véhicule à partir de l'arbre de sortie (3) du moteur ;
un deuxième arbre de commande (6b) destiné à transmettre de l'énergie aux roues arrières (26), disposé le long du côté du conduit (22) par l'intermédiaire d'un premier élément de jonction (71) relié à l'extrémité arrière du premier arbre de commande (6a);
un troisième arbre de commande (11a) disposé à une position parallèle au deuxième arbre de commande (6b) ;
un moyen de transmission (52, 53 ; 12) installé au niveau de l'extrémité avant du deuxième arbre de commande (6b) pour transmettre de l'énergie du deuxième arbre de
commande (6b) au troisième arbre de commande (11a) ;
un quatrième arbre de commande (11b) destiné à transmettre de l'énergie à un arbre d'entrée (15) des lames (54) par l'intermédiaire d'un deuxième élément de jonction (72) relié à l'extrémité avant du troisième arbre de commande (11a) ;
où l'arbre d'entrée (15) et le quatrième arbre de commande (11b) sont reliés par l'intermédiaire d'un troisième élément de jonction (73), le premier arbre de commande (6a) est disposé en diagonale vers l'arrière sur la gauche de la ligne centrale L, lorsqu'on regarde d'en-haut, le deuxième arbre de commande (6b) et le troisième arbre de commande (11a) se trouvent latéralement sur la gauche de la ligne centrale L et le premier arbre de commande (6a) et le quatrième arbre de commande (11b) sont disposés, le côté arrière du quadrilatère, formé par l'assemblage des quatre extrémités du premier et du quatrième arbres de commande (6a et 11b), étant plus étroit que le côté avant, en regardant d'en-haut.

2. Tondeuse à gazon selon la revendication 1 **caractérisée en ce qu'**une paire d'arbres de transmission gauche et droit (14, 14), sont réglés de sorte à être rotatifs au niveau du châssis (13) de la tondeuse, une paire d'engrenages (54, 54) sont prévus au niveau de la partie d'extrémité inférieure de chacun des arbres de transmission (14, 14), un premier et un deuxième carters d'engrenage (59, 60) sont respectivement installés au-dessus de chacun des arbres de transmission (14, 14) sur le châssis (13) de la tondeuse,
l'arbre d'entrée (15) est supporté en rotation sur le premier carter d'engrenage (59), et est interconnecté à l'arbre de transmission (14) situé directement en-dessous par l'intermédiaire d'engrenages coniques enchevêtrés (14') prévus au niveau de l'extrémité de l'arbre de transmission (14) et d'un engrenage conique (15') prévu au niveau de l'extrémité de l'engrenage de l'arbre de transmission (15), et un arbre de commande (62) des lames est prévu pour transmettre l'énergie provenant de l'arbre d'entrée (15) du premier carter d'engrenage (59) au deuxième carter d'engrenage (60).
